# EUROPEAN PATENT APPLICATION

(11) **EP 3 147 744 A1**
(43) Date of publication of application: **29.03.2017**
(21) Application number: 15186816.3
(22) Date of filing: 25.09.2015
(51) Int. Cl.: G05D 7/06, G05D 11/16, G05D 23/19, E03C 1/05, F16K 11/22

(54) **DEVICE FOR REGULATING THE FLOW RATE AND TEMPERATURE IN A SHOWER OR BATHTUB OR IN A SINK OF A BATH OR KITCHEN**

(71) Applicant: Nobili, Fabrizio, 6534 San Vittore (CH)
(72) Inventor: Nobili, Fabrizio, 6534 San Vittore (CH)
(74) Representative: Zardi, Marco

(57) **Abstract**

A device (1) for regulating the flow rate and temperature in a shower or bathtub or in a sink of a bathroom or kitchen is described, said device comprising: a hot water inlet (2) and a cold water inlet (3); a mixing chamber (4) in fluid communication with the hot water and cold water inlets and with an outlet (5); two cylinders (6, 7) associated, respectively, with the hot water inlet (2) and the cold water inlet (3); two electric motors (8, 9) for actuating the cylinders (6, 7), adapted to cause the cylinders (6, 7) to slide axially, so as to regulate the flow rate of the hot water and the cold water towards the mixing chamber (4). The two cylinders (6, 7) are hollow and coaxial; the device comprises two collars (10, 11) coaxial with the cylinders (6, 7); the cylinders (6, 7), when engaged over the collars (10, 11), interrupt a fluid flow path towards the mixing chamber (4); the cylinders (6, 7), when disengaged from the collars (10, 11), free the fluid flow path at a flow rate corresponding to a distance between the cylinders (6, 7) and the collars (10, 11); the cross-section (S) of the cylinders (6, 7) is greater than or equal to a cross-section (S') of the fluid flow path at a maximum flow rate.

## Description

### Field of application

The present invention relates to a device for regulating the flow rate and temperature in a shower or bathtub or in a sink of a bathroom or kitchen.

In particular, the present invention relates to a device of the aforementioned type, in which regulation of the flow rate and the temperature is performed electrically.

### Prior art

Devices for regulating the flow rate and temperature in a shower or in a sink of a bathroom or kitchen, in particular devices for performing regulation electrically, are known.

Such devices comprise closing members electrically controlled from a pushbutton unit which can be mounted for example on the shower panel or on the bathtub, on the kitchen worktop or on the bathroom sink and which is electrically connected to electrical actuators of said closing members. The actuators, closing members and substantially all the other components of the device are installed concealed behind the shower panel or between the bathtub and the wall, underneath the worktop or underneath the sink, leaving only the pushbutton unit visible.

These devices satisfy certain requirements, for example they allow the temperature and flow rate of the water to be regulated with a good degree of precision, but they are however subject to a number of problems, in particular in a domestic environment.

Firstly, the various components to be installed in a concealed manner occupy a space which complicates the work of the installation engineer or results in the need to provide a relatively large receiving seat in the shower panel, behind the bathtub or underneath the sink, with the inevitable consequence of reducing the space available for the user, for example underneath the sink, or altering the aesthetic appearance of the installation.

Moreover, the known devices are not suitable for operation in certain particular conditions, for example when the pressure of the hot or cold water from the supply network, from a boiler or from a heating unit is high. In such cases it happens that the actuators are unable to move the closing members or the movement of the closing members is delayed by the high pressure of the water, producing an error or a delay in regulation. It also happens that the actuators may be subject to faults or malfunctions owing to prolonged use under high-pressure conditions.

Moreover, increasing the power of the actuators so that they are able to operate in high-pressure conditions results in an increase in the size of the device, this increase being undesirable for the reasons already mentioned above.

The technical problem forming the basis of the present invention is that of devising an electric device for regulating the flow rate and the temperature of the water which is able to perform very precise regulation, while operating under high-pressure conditions, assembling all the regulation components together in a small amount of space, thus substantially overcoming the drawbacks which hitherto affect the devices of the prior art.

### Summary of the invention

The idea underlying the present invention is to control the temperature and the flow rate of the water by means of two closing members sliding along a same axis X perpendicular to the hot water and cold water inlets and actuating the closing members by means of two electric motors. In particular, the closing members are cylindrical and hollow and have an opening sliding on a guide collar and an opposite opening designed to close the flow, when engaged over a collar situated opposite the guide collar, and open the flow, when disengaged from said opposite collar.

Preferably, the collars project from a base and the cylinders, also on the end-of-travel positions, corresponding to full opening or closing of the flow, are arranged at a distance from the base. This distance allows the water to exert a substantially equivalent pressure on the opposite base profiles of the cylinders, practically eliminating the resistance of the water along the axis X on which the closing members slide. The pressure exerted on the side surface of the cylinder is also perfectly balanced. Such a configuration allows low-power and small-size electric motors to be used even when the water has a high pressure.

On the basis of this proposed solution, the technical problem is solved by a device for regulating the flow rate and the temperature in a shower, in a bathtub or in a basin of a bathroom or a kitchen.
- a hot water inlet and a cold water inlet;
- a mixing chamber in fluid communication with the hot water and cold water inlets and with an outlet;
- two cylinders associated, respectively, with the hot water inlet and the cold water outlet;
- two electric motors for actuating the cylinders, designed to cause the cylinders to slide axially, so as to regulate or interrupt the flow rate of the hot water and the cold water towards the mixing chamber;
   characterized in that:
- the two cylinders are hollow and slide on a same axis perpendicular to the hot and cold water inlets; and that
- the device comprises two collars coaxial with the cylinders;
- the cylinders, when engaged over the collars, interrupt a fluid flow path towards the mixing chamber;
- the cylinders, when disengaged from the collars, free the fluid flow path at a flow rate corresponding to a distance between the cylinders and the collars;
- a cross-section of the cylinders being greater than or equal to a cross-section of the fluid flow path at a maximum flow rate.

In particular, the collars are situated opposite the guide collars on which the cylinders are slidingly engaged.

According to one aspect of the invention, the device also comprises:
- a main body delimiting the inlets;
- two side blocks mounted on the main body and delimiting, with the main body and the cylinders, a section of the fluid flow path towards the mixing chamber;
- the electric motors are mounted on the side blocks and comprise shafts guiding the cylinders along the section of the fluid flow path.

The main body also forms guide collars on which the two cylinders are slidable between a position for fully opening the flow, corresponding to predetermined and maximum superimposition of the cylinder on the guide collar, and a position for closing the flow, corresponding to predetermined and minimum superimposition of the cylinder on the guide collar and superimposition of the cylinder on the collar opposite the guide collar.

The cylinders are independently adjustable. A travel movement of one cylinder on the respective guide collar is adjustable independently from a travel movement of the other cylinder on the respective guide collar, and said travel movements correspond to a flow rate of hot water or cold water.

The main body also forms a base of the guide collars. The cylinders never make contact with the base of the guide collars, not even in the end-of-travel positions, allowing the water between the base of the guide collar and the base profile of the cylinders to counterbalance the pressure exerted by the water on the opposite base profile of the cylinders.

The inlets are parallel to each other and perpendicular to the axis of the two cylinders.

The collars situated opposite the guide collars extend from a base of the side blocks. The cylinders do not come into contact even with the base of the oppositely arranged collars.

According to another aspect of the invention, the mixing chamber comprises a mixing path or a labyrinth designed to mix the water from the hot water and cold water inlets upstream of the outlet.

In particular, the mixing chamber comprises a block mounted on the main body by means of a threaded equidistant from the axes Y', Y" of the inlets. The block delimits the outlet. The outlet is perpendicular to the axis X of the cylinders and is not coaxial with the axes of the inlets Y', Y" and the axis Y of the threaded.

A temperature sensor is mounted at the outlet and is disconnected from an electronic board for regulating the electric motors which receive at their input a temperature measured by the sensor and implements a feedback loop such as to correct the position of the cylinders if the temperature measured is different from a temperature set by the user. Also provided are small pillars which are fixed to the base of the side bodies around the collars, at an angular distance of 120°, and form an anti-vibration guide for one end of the cylinders.

The said cylinders are fixed to the guide shafts by means of respective discs which have a central hub and three equidistant radial arms terminating on the cylinders.

The device is portable. For example it has dimensions of 10 cm x 10 cm x 5 cm. It can also be installed concealed behind a shower panel or underneath a sink.

The device comprises a transformer for powering the electric board and the motors, which is connected to an electric terminal or plug. Said terminal is designed to be connected to an a.c. electric household socket.

The device also comprises a keypad or touch screen interface for sending commands for regulating the flow rate or the temperature to the electronic board.

Further characteristic features and advantages of the present invention will become clear from the following description below, provided with reference to the accompanying drawings purely by way of a non-limiting example.

### Brief description of the drawings

Figure 1 is a side view of the regulating device according to the present invention.
Figure 2 is a view along the cross-section A-A of the device shown in Figure 1.
Figure 3 is another side view of the regulating device according to Figure 1, rotated through 90°.
Figure 4 is a view along the cross-section D-D of the device shown in Figure 3.
Figure 5 is a front view of the regulating device according to Figure 1.
Figure 6 is a view along the cross-section E-E of the device shown in Figure 5.

### Detailed description

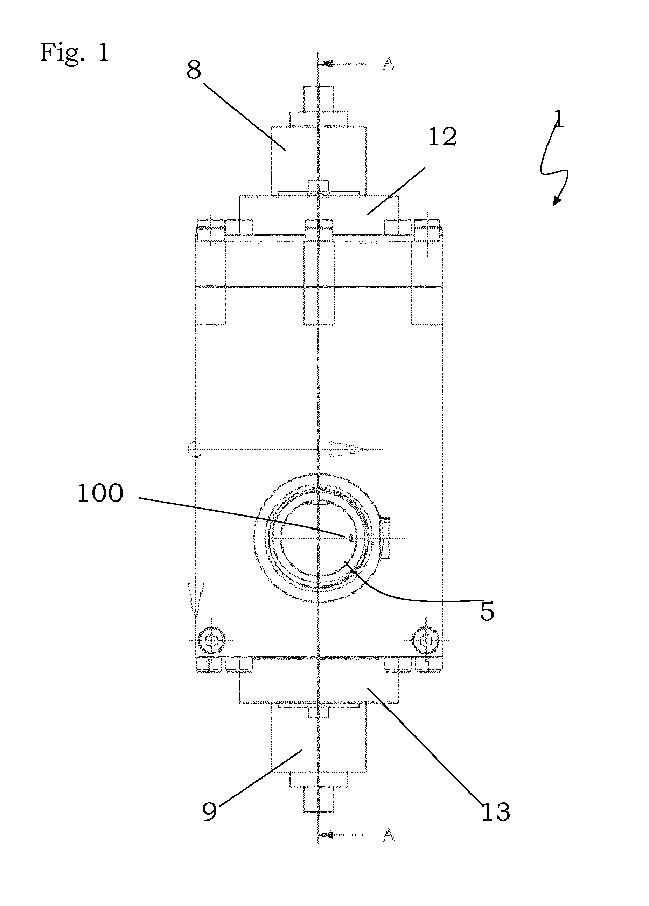

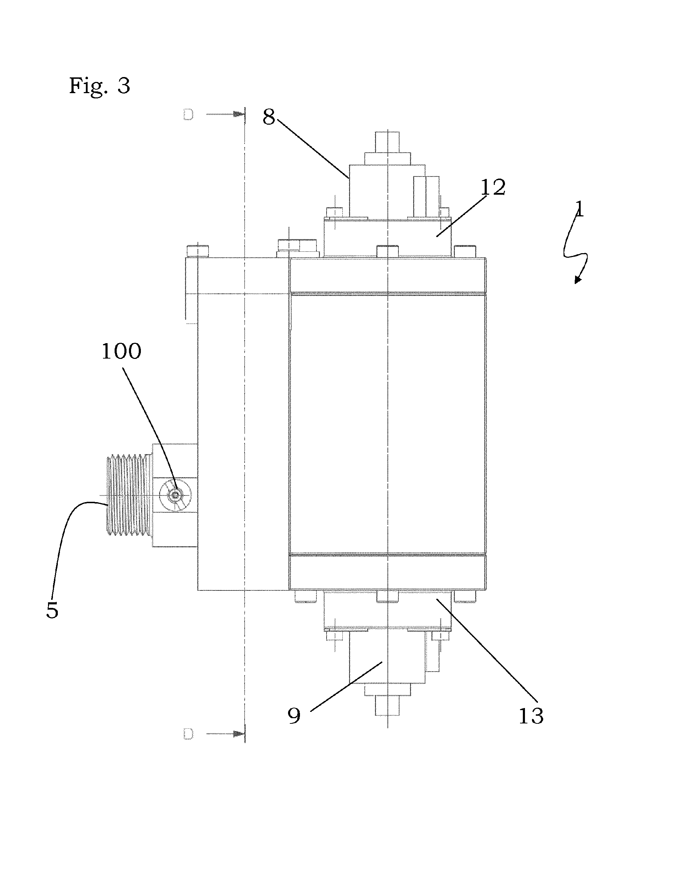

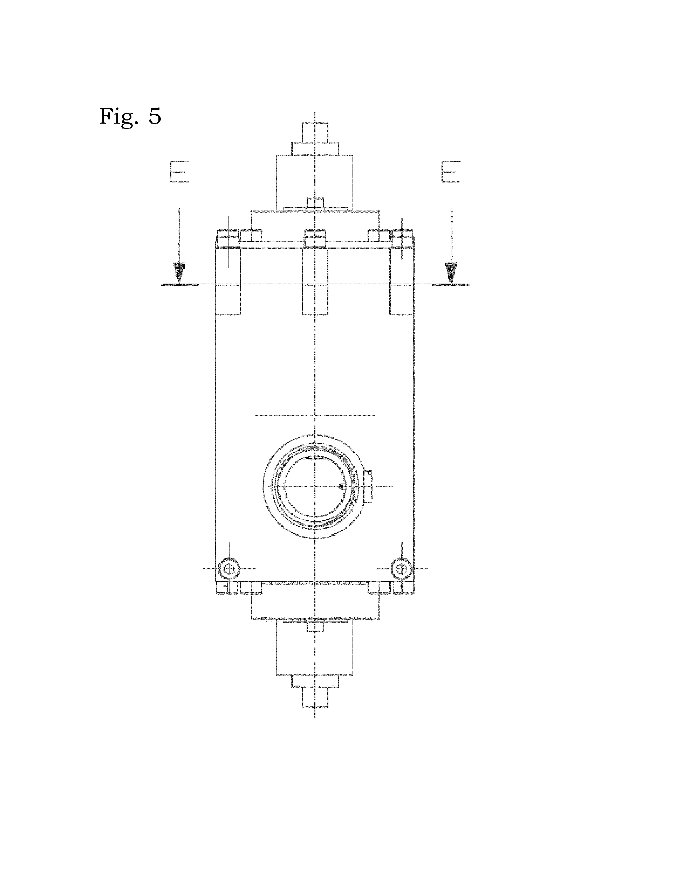

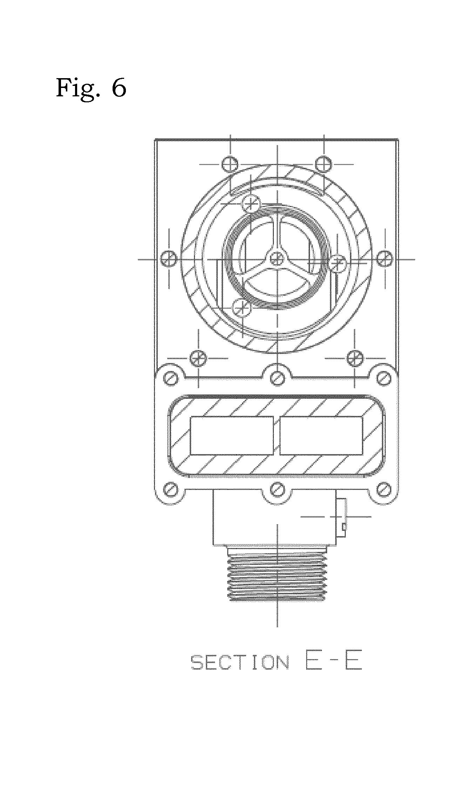

Figures 1-6 show a device for regulating the flow rate and the temperature for a shower, a bathtub or a sink of a bathroom or kitchen according to the present invention, and in particular a device designed to perform the regulation electrically. The device is portable and can be mounted on the shower panel or on the bathtub, on the worktop of the kitchen or on the basin of the bathroom and can be connected electrically to an electric power supply socket, for example a wall socket. Alternatively, the device is powered by a battery, which is preferably rechargeable.

Figure 1 is a side view of the device 1. The device comprises a main body 14 on which two coaxial side bodies 12, 13 are mounted on opposite sides, said bodies also forming a connecting mount for two respective electric motors 8, 9. An outlet 5 for the mixed fluid is perpendicular to the axis of the side bodies 12, 13 or to a plane passing through said axis, and a sensor 100 is mounted on the outlet 5 for measuring the temperature of the outlet water.

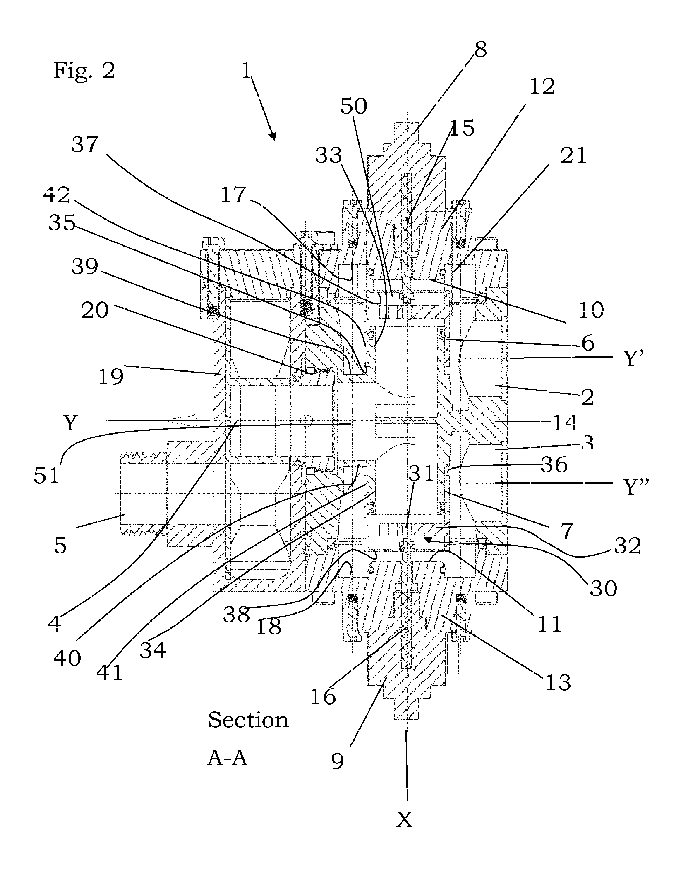

Figure 2 is a cross-section along the plane A-A of the device shown in Figure 1, in which two closing cylinders 6, 7 are visible. Each cylinder 6, 7 is coupled to a guide shaft 15, 16 of a respective electric motor 8, 9 by means of a disc 30. The disc 30 comprises a central hub 32 and three radial arms 32 which extend from the central hub 32 and terminate in a thickness of the cylinders 6, 7. The hub 32 is fixed to the guide shaft 15, 16, for example to one end of the shaft 15, 16.

The three radial arms are angularly spaced. However, it is also possible to use only two radial arms or more than three radial arms which are equidistant.

Grooves are provided along the inner side surface of each cylinder 6, 7 and the discs 30 are engaged inside them at a predetermined distance from the base of the cylinder.

Each electric motor is connected to an electronic board (not shown) of the device, which is enclosed inside a hydraulically sealed seat and which controls the motors, causing the advancing movement or retraction of the guide shaft 15, 16 and the associated cylinder 6, 7 along the axis X. The command is issued via a pushbutton unit connected electrically to the circuit board, preferably a pushbutton unit with two pushbuttons for increasing or reducing the flow rate, two pushbuttons for increasing or lowering the temperature and a pushbutton for opening or closing the flow.

The side bodies 12, 13 have respective bases 17, 18 which are directed towards the inside of the device 1 and from which two collars 10, 11 provided with a respective seal project. Each cylinder 6, 7 is slidable until it engages with a base 37, 38 on the collar 10, 11, so as to engage with the seal and close the flow entering via respective hot water and cold water inlets 2, 3.

The inlets 2, 3 have their axes Y', Y" perpendicular to the axis X of the cylinders 6, 7 and are formed in the main body 14 which also forms guide collars 33, 34 for a portion 41, 42 of the cylinders 6, 7 comprising a base 35, 36 situated opposite the base 37, 38 intended to close the flow. Essentially, the flow rate corresponds to a distance of the base 37, 38 of the cylinder 6, 7 from the collar 10, 11, i.e. the greater the distance, the greater is the flow rate. In order to perform closure, the cylinder 6, 7 is engaged over both the collars 10, 11 and closes the passage between the two collars 10, 11.

According to the present invention, the internal cross-section of the cylinders 6, 7 is greater than or equal to maximum flow rate, i.e. to the maximum distance between the base 37, 38 of the cylinder 6, 7 and the collar 10, 11 measured at the end of the shaft 15, 16. Advantageously, according to this aspect of the invention, the cross-section of the cylinder 6, 7 does not limit the flow rate along the fluid flow path towards the outlet and favours a total radial opening.

The portion 41, 42 of the cylinders 6, 7 comprising the base 35, 36 is slidable on the guide collars 33, 34, leaving however a space between the base 39, 40 of the guide collars 33, 34 and the base 35, 36 of the cylinders 6, 7, also in the position where the cylinders 6, 7 are furthest advanced on the guide collars 33, 34. Similarly, the other base 37, 38 of the cylinders does not make contact with the base 17, 18 of the collars 10, 11, not even in the position where the cylinders 6, 7 are fully retracted from the guide collars 33, 34.

Operatively speaking, such a sliding movement of the cylinders 6, 7 allows the water to exert an equal pressure on the profiles of the base 35, 36 and on the profiles of the bases 37, 38 of the cylinders 6, 7, without creating any obstacle to the sliding movement of the cylinders 6, 7 and therefore minimizing the electric power used by the electric motor to move the cylinders 6, 7. Moreover, the radial pressure exerted on the side surface of the cylinders 6, 7 does not influence particularly the axial sliding thereof and is balanced since it acts along the entire side surface. In this connection, the cylinders are immersed inside a chamber 50 formed by the main body 14 and by the side bodies 12, 13.

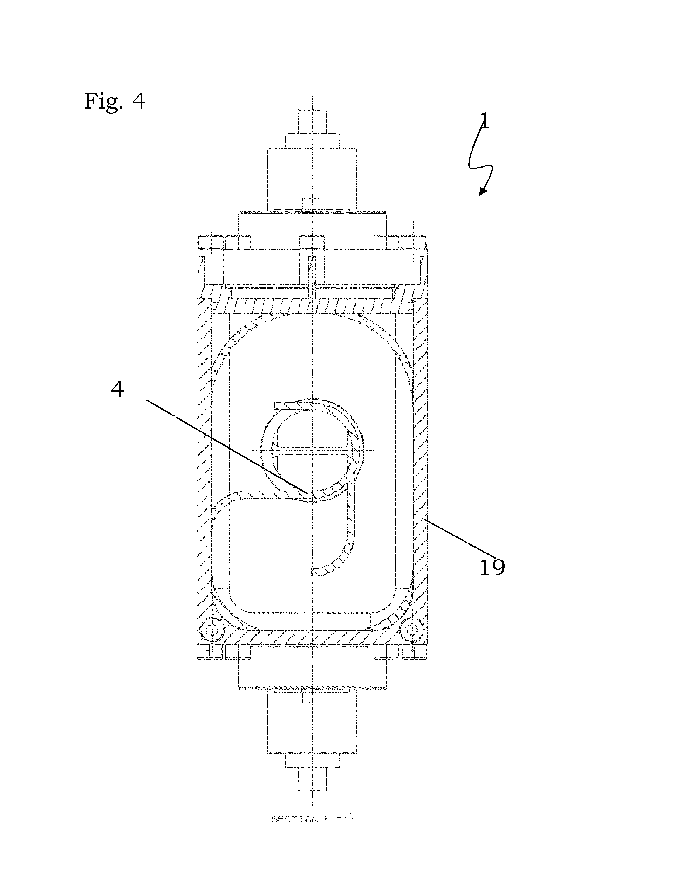

A body 19 which forms a chamber 4 for mixing the hot water and cold water is preferably mounted on an outlet 51 of said chamber 50, as can be seen in Figure 4. The mixing chamber 4 forms a forced flow path for the hot water towards the cold water and vice versa, forcing the two water flows to meet and be mixed before flowing into the outlet 5 where the temperature is measured.

The temperature of the mixed water is detected by the sensor 100 and compared in the electronic board with a value set by the user via the pushbutton unit. In the event of a difference between the temperature detected and the set temperature, the electronic board automatically regulates the position of the cylinders.

Advantageously, the installation of the components of the device 1 is particularly facilitated: firstly the cylinders 6, 7 are inserted inside the side bodies 12 and 13 including the discs 30, then the electric motors including the guide shafts 15, 16 with the respective seals are mounted; finally, the side bodies 12, 13 and the mixer 19 which incorporates the mixing chamber and the outlet 5 are mounted on the main body 14.

Advantageously, the installation of the portable device is also greatly simplified. Underneath the sink or behind the shower panel the flexible pipes for supplying the hot water and cold water are connected to the inlets 2, 3 and the outlet 5 is connected to the water tap. The keypad is fixed onto the basin or onto the shower panel in a visible position. Finally the device is connected to an electric socket. It is envisaged using rechargeable batteries and non-rechargeable batteries as a power supply unit; in this case a connection to the electric mains power is not required.

## Claims

1. Device (1) for regulating the flow rate and temperature in a shower or bathtub or in a sink of a bathroom or kitchen, comprising:
- a hot water inlet (2) and a cold water inlet (3);
- a mixing chamber (4) in fluid communication with the hot water and cold water inlets and with an outlet (5);
- two cylinders (6, 7) associated, respectively, with the hot water inlet (2) and cold water outlet (3);
- two electric motors (8, 9) for actuating the cylinders (6, 7), adapted to cause the cylinders (6, 7) to slide axially, so as to regulate the flow rate of the hot water and the cold water towards the mixing chamber (4);
**characterized in that**:
- the two cylinders (6, 7) are hollow and slide on a same axis perpendicular to the hot and cold water inlets (2, 3);
- the device comprises two collars (10, 11) coaxial with the cylinders (6, 7);
- the cylinders (6, 7), when engaged over the collars (10, 11), interrupt a fluid flow path towards the mixing chamber (4);
- the cylinders (6, 7), when disengaged from the collars (10, 11), free the fluid flow path at a flow rate corresponding to a distance between the cylinders (6, 7) and the collars (10, 11);
- a cross-section (S) of the cylinders being greater than or equal to a cross-section (S') of the fluid flow path at a maximum flow rate.

2. Device according to Claim 1, **characterized in that** it comprises
- a main body (14) delimiting the inlets (2, 3);
- two side blocks (12, 13) mounted on the main body (14) and delimiting, with the main body (14) and the cylinders, a section of the fluid flow path towards the mixing chamber (4);
- the electric motors (8, 9) are mounted on the side blocks (12, 13) and comprise guiding of shafts (15, 16) the cylinders (6, 7) along said section of the fluid flow path.

3. Device according to claim 2, **characterized in that** the inlets (2, 3) are parallel to each other and perpendicular to the axis of the two cylinders (6, 7).

4. Device according to claim 2, **characterized in that** the collars (10, 11) extend from a base (17, 18) of the side blocks (12, 13) and the cylinders are not in contact with the base (17, 18).

5. Device according to claim 1, **characterized in that** the mixing chamber (4) comprises a mixing flow path or a labyrinth adapted to mix the water from the hot and cold water inlets (2, 3) upstream of said outlet.

6. Device according to claim 5, **characterized in that** the mixing chamber (4) comprises a block (19) mounted on the main body (14) by means of a threaded (20) equidistant from the axes Y', Y" of said inlets (2, 3).

7. Device according to claim 6, **characterized in that** the block (19) delimits the outlet (5), said outlet (5) being perpendicular to the axis X of the cylinders (6, 7) and not coaxial with the inlets Y', Y" and the axis Y of the threaded (20).

8. Device according to claim 1, **characterized in that** it comprises a temperature sensor (100) at the outlet (5) and an electronic board for regulating the electric motors (8, 9), said electronic board receiving at its input a temperature measured by the sensor (100) and implementing a feedback loop designed to correct the position of the cylinders (6, 7) if the temperature measured is different from a temperature set by the user.

9. Device according to claim 4, **characterized in that** three pillars (21) are fixed to the base (17, 18) around the collars (10, 11) at an angular distance of 120° and form an anti-vibration guide for one end of the cylinders (6, 7).

10. Device according to claim 2, **characterized in that** said cylinders (6, 7) are fixed to said guide shafts by means of respective discs which have a central hub and three equidistant radial arms terminating on the cylinders.

11. Device according to claim 1, **characterized in that** it is portable and can be installed concealed behind a shower panel or underneath a sink.

12. Device according to claim 1, **characterized in that** it comprises a transformer and an electric terminal designed to be connected to an electric A.C. household socket.

13. Device according to claim 8, **characterized in that** it comprises a keypad or touch screen interface for sending commands to regulate the flow rate or the temperature to the electronic board.
